(19) **Europäisches Patentamt**
**European Patent Office**
**Office européen des brevets**

(11) **EP 3 876 602 B1**

(12) **EUROPEAN PATENT SPECIFICATION**

(45) Date of publication and mention
of the grant of the patent:
**28.02.2024 Bulletin 2024/09**

(21) Application number: **21159280.3**

(22) Date of filing: **25.02.2021**

(51) International Patent Classification (IPC):
**H04W 36/02** (2009.01)     **H04W 4/029** (2018.01)
**H04W 76/27** (2018.01)     **H04W 36/00** (2009.01)
**H04W 48/20** (2009.01)

(52) Cooperative Patent Classification (CPC):
**H04W 4/029; H04W 36/0033; H04W 76/27;**
H04W 48/20

(54) **EFFICIENT TRANSFER OF ACCESS CONTEXT FOR USER EQUIPMENT AMONG NETWORK NODES**

EFFIZIENTE ÜBERTRAGUNG VON ZUGANGSKONTEXT FÜR BENUTZERGERÄTE ZWISCHEN NETZKNOTEN

TRANSFERT EFFICACE DE CONTEXTE D'ACCÈS POUR UN ÉQUIPEMENT UTILISATEUR ENTRE DES NOEUDS DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2020 FI 20205216**

(43) Date of publication of application:
**08.09.2021 Bulletin 2021/36**

(73) Proprietor: **Nokia Solutions and Networks Oy**
**02610 Espoo (FI)**

(72) Inventors:
• **KHLASS, Ahlem**
**91620 Nozay (FR)**
• **PARIS, Stefano**
**92170 Vanves (FR)**

• **LASELVA, Daniela**
**9270 Klarup (DK)**

(74) Representative: **Nokia EPO representatives**
**Nokia Technologies Oy**
**Karakaari 7**
**02610 Espoo (FI)**

(56) References cited:
**EP-A1- 2 123 088     EP-A1- 3 445 086**
**EP-A1- 3 567 980     EP-B1- 2 123 088**
**WO-A1-2019/232746     WO-A1-2020/040673**
**US-A1- 2007 230 399     US-A1- 2008 240 439**
**US-A1- 2014 348 133     US-A1- 2018 270 792**
**US-B1- 9 480 046**

## Description

### TECHNICAL FIELD

The present disclosure relates generally to the field of wireless communications, and in particular to techniques for efficiently transferring, among network nodes, an access context required to initiate data transfer when a user equipment (UE) is in a suspended Radio Access Network (RAN) connection state.

### BACKGROUND

According to the 5G communication technology, if a UE is about to resume a Radio Resource Control (RRC) connection by accessing a target network node, i.e. gNodeB (gNB), other than a last serving gNB, the target gNB triggers a Xn Application Protocol (XnAP) Retrieve UE Access Stratum (AS) context procedure to receive a UE AS context from the last serving gNB. The last serving gNB is also referred to as an anchor gNB since it anchors the UE AS context in a Radio Access Network (RAN). The target gNB becomes a new serving or anchor gNB after the UE AS context is successfully relocated, whereas the UE AS context can be safely released in the last serving gNB. The UE AS context is then used to resume the RRC connection for the UE.

However, this XnAP Retrieve UE AS context procedure suffers from a resume latency, which is mainly affected by an Xn-interface latency. Assuming the Xn-interface latency of 10 ms, a retrieval latency will be at least 20 ms, i.e. round-trip time. Such a latency would increase significantly the resume latency (that is about 10 ms without the retrieval of the UE AS context). This can adversely affect the performance of services, such as time-sensitive applications, which are characterized by low-latency requirements.

As one possible workaround for the problem above, after the RRC connection is suspended for the UE, the last serving gNB could send the UE AS context to any gNBs in the RAN or a RAN notification area (RNA), within which the UE can resume the RRC connection. This would indeed reduce the resume latency as any target gNB in the RAN/RNA would avoid the XnAP Retrieve UE AS context procedure in case of resuming the RRC connection for the UE. However, pushing the UE AS context to all cells in the RAN/RNA increases both the Xn signalling overhead (i.e. useless UE AS context transfer to the gNBs where the UE will not resume at all) and the storage capacity overhead to store the UE AS context in each gNB, which could be rather consuming in respect to massive Internet-of-Thigs (MIoT) and Machine-Type-Communication (mMTC) applications.

US 2007/230399 A1, EP 3 445 086 A1, WO 2019/232746 A1, WO 2020/040673 A1, US 2014/348133 A1, EP 2 1 23 088 A1, US 2008/240439 A1, US 2018/270792 A1, EP 3 567 980 A1 and US 9 480 046 B1 describe prior art solutions pertaining, at least in part, to transfer of UE context information.

### SUMMARY

This summary is provided to introduce a selection of concepts in a simplified form that are further described below in the detailed description. This summary is not intended to identify key features or essential features of the present disclosure, nor is it intended to be used to limit the scope of the present disclosure.

It is an object of the present disclosure to provide a technical solution that enables a more efficient (in terms of network signalling, storage capacity, and a latency) transfer of an access context, which is required to initiate data transfer when a UE is in an active or suspended RAN connection state, from an anchor network node to one or more target network nodes.

The object above is achieved by the features of the independent claims in the appended claims. Further embodiments and examples are apparent from the dependent claims, the detailed description and the accompanying drawings. The embodiments that do not fall under the scope of the claims are to be interpreted as examples useful for understanding the disclosure.

According to a first aspect, an anchor network node is provided. The anchor network node comprises a means for storing: an access context required to initiate data transfer when a UE is in a suspended RAN connection state of a UE; and mobility information and a traffic profile both relating to the UE. The anchor network node further comprises a means for determining, based on the mobility information, that the UE is about to exit an anchor cell served by the anchor network node. The anchor network node further comprises a means for predicting, based on the mobility information and the traffic profile, a target time when the UE is about to initiate data transfer, and at least one target cell in which the UE would appear to be located at the target time. The anchor network node further comprises a means for sending the access context to at least one target network node serving the at least one target cell before the target time. In this example embodiment, the access context may be transferred proactively from the anchor network node to one or more other network nodes without having to use the legacy XnAP Retrieve UE AS context procedure, thereby minimizing or even avoiding the resume latency and reducing UE power consumption. Moreover, this example embodiment minimizes network signaling because the access context is transferred only to a predicted set of other network nodes, with the predicted set having a reduced number of such network nodes compared to that in the whole RAN/RNA. On top of that, this example embodiment may support the small data transmission from the suspended RAN connection state, which is proposed in the 3GPP NR Rel-17.

According to a second aspect, a method for operating an anchor network node is provided. The method comprises the step of storing an access context required to initiate data transfer when a UE is in an active or suspended RAN connection state. The method further comprises the step of determining, based on pre-stored mobility information, that the UE is about to exit an anchor cell served by the anchor network node. The method further comprises the step of predicting, based on the pre-stored mobility information and a pre-stored traffic profile, a target time when the UE is about to initiate the data transfer, and at least one target cell in which the UE would appear to be located at the target time. The method eventually comprises the step of sending the access context to at least one target network node serving the at least one target cell before the target time. In this example embodiment, the access context may be transferred proactively from the anchor network node to one or more other network nodes without having to use the legacy XnAP Retrieve UE AS context procedure, thereby minimizing or even avoiding the resume latency and reducing UE power consumption. Moreover, this example embodiment minimizes network signaling because the access context is transferred only to a predicted set of other network nodes, with the predicted set having a reduced number of such network nodes compared to that in the whole RAN/RNA. On top of that, this example embodiment may support the small data transmission from the suspended RAN connection state, which is proposed in the 3GPP NR Rel-17.

According to a third aspect, a computer program product is provided, which comprises a computer-readable medium having a computer code stored thereon. The computer code, when executed by at least one processor, causes the at least one processor to perform the method according to the second aspect of the present disclosure. This may simplify the implementation of the method according to the second aspect of the present disclosure.

Other features and advantages of the present disclosure will be apparent upon reading the following detailed description and reviewing the accompanying drawings.

## BRIEF DESCRIPTION OF THE DRAWINGS

The essence of the present disclosure is explained below with reference to the accompanying drawings in which:

FIG. 1 shows an RRC state machine for a Next-Generation (NG) RAN;

FIG. 2 shows an interaction diagram for transferring an access context from a last anchor gNB to an accessed gNB in accordance with the legacy XnAP Retrieve UE AS context procedure;

FIG. 3 schematically illustrates one possible workaround for the problem of a significant resume latency primarily caused by an Xn-interface latency;

FIG. 4 shows a block-scheme of an anchor network node capable of implementing an uplink scenario (i.e. the UE-initiated resume of the active RAN connection state) in accordance with one example embodiment;

FIG. 5 shows a flowchart of a method for operating the anchor network node shown in FIG. 4 in accordance with one exemplary embodiment;

FIG. 6 shows one example of how to determine that a UE is about to exit an anchor cell;

FIG. 7 shows a flowchart for predicting when and to where the access context should be transferred;

FIG. 8 illustrates discrete functions $I_{ui}(t)$ and duration $A_{ui}(t)$ that model a UE activity;

FIG. 9 schematically illustrates the case in which the flowchart shown in FIG. 7 is executed at a centralized node of a RAN;

FIG. 10 schematically illustrates the case in which the flowchart shown in FIG. 7 is executed at any anchor network node of the RAN;

FIG. 11 shows a block-scheme of an anchor network node capable of implementing the downlink scenario (i.e. the network-initiated resume of the active RAN connection state) in accordance with one example embodiment;

FIG. 12 shows a flowchart of a method for operating the anchor network node shown in FIG. 11 in accordance with one exemplary embodiment.

## DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatuses and methods disclosed herein can be implemented in practice by using any numbers of the embodiments provided herein. Furthermore, it should be understood that any embodiment of the present disclosure can be implemented using one or more of the elements presented in the appended claims.

The word "example" is used herein in the meaning of "used as an illustration". Unless otherwise stated, any embodiment described herein as "example" should not be construed as preferable or having an advantage over other embodiments.

According to the example embodiments disclosed herein, a user equipment or UE for short may refer to a mobile device, a mobile station, a terminal, a subscriber unit, a mobile phone, a cellular phone, a smart phone, a cordless phone, a personal digital assistant (PDA), a wireless communication device, a laptop computer, a tablet computer, a gaming device, a netbook, a smartbook, an ultrabook, a medical device or medical equipment, a biometric sensor, a wearable device (for example, a smart watch, smart glasses, a smart wrist band), an entertainment device (for example, an audio player, a video player, etc.), a vehicular component or sensor, a smart meter/sensor, industrial manufacturing equipment, a global positioning system (GPS) device, an Internet-of-Things (IoT) device, a machine-type communication (MTC) device, a group of Massive IoT (MIoT) or Massive MTC (mMTC) devices/sensors, or any other suitable device configured to support wireless communications. In one other example embodiment, the UE may refer to at least two collocated and inter-connected UEs thus defined.

According to the example embodiments disclosed herein, a network node may relate to a node of a Radio Access Network (RAN), such as a Global System for Mobile Communications (GSM) RAN (GRAN), a GMS EDGE RAN (GERAN), a Universal Mobile Telecommunications System (UMTS) RAN (UTRAN), a Long-Term Evolution (LTE) UTRAN (E-UTRAN), Next-Generation (NG) RAN. Such a network node is used to connect the UE to a Data Network (DN) through a Core Network (CN), and is referred to as a base transceiver station (BTS) in terms of the 2G communication technology, a NodeB in terms of the 3G communication technology, an evolved NodeB (eNodeB) in terms of the 4G communication technology, and a gNodeB (gNB) in terms of the 5G communication technology and New Radio (NR) air interface.

According to the example embodiments disclosed herein, an active RAN connection state may refer to a state where the UE is connected to the RAN and the CN via the network node and is able to receive and transmit data traffic with no restriction of data size, and a suspended RAN connection state may refer to a state where the UE maintains information relating to its preceding connection to the RAN via the network node, but in a suspended fashion, in which either no data traffic is temporarily available to the UE or data traffic is available with limitation (for instance, data transferred are supported up to, e.g., 1000 byte). In the 5G NR system, these RAN connection states are defined in accordance with a Radio Resource Control (RRC) protocol (complemented in the 3GPP NR Rel-15), for which reason the active RAN connection state is called RRC_CONNECTED and the suspended RAN connection state is called RRC_INACTIVE. There is also an idle state, i.e. RRC_IDLE, in which the UE has no connection with the RAN nor the CN, thereby significantly reducing power consumption similarly to the RRC_INACTIVE state. It should be noted that the present disclosure is not limited to the above-defined RRC states, and any other similar connection states, which are already existing or may be invented in future, may be used instead of the RRC states.

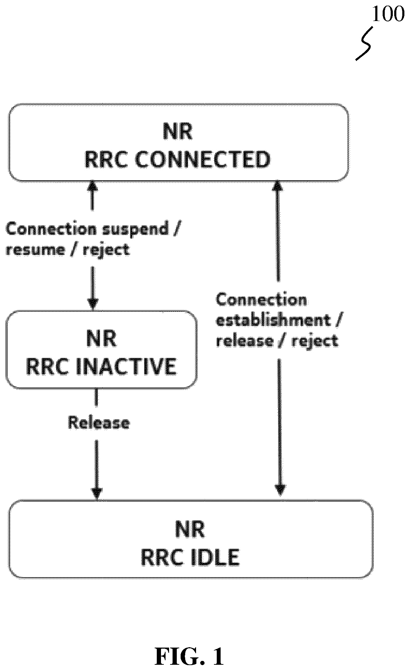

FIG. 1 shows an RRC state machine 100 for the NG RAN. As shown in FIG. 1, the UE may be either in the RRC_CONNECTED state or in the RRC_INACTIVE state when an RRC connection has been established. If this is not the case, i.e. no RRC connection is established, the UE is in the RRC_IDLE state.

The RRC_INACTIVE state enables the full RRC connection to be quickly resumed, whereupon the transmission of small or sporadic data may be initiated with a much lower initial access delay and associated signalling overhead as compared to the RRC_IDLE state. In other words, the RRC_INACTIVE state enables a faster transition to the RRC_CONNECTED state. This is achieved mainly thanks to reduced control signalling required for requesting and obtaining the resume of a suspended RRC connection, which results in saving UE power saving. At the same time, the UE in the RRC_INACTIVE state is able to achieve similar power savings as in the RRC_IDLE state. Although the RRC state machine 100 was conceived particularly for mMTC/MIoT services, it could be beneficial to efficiently deliver small/infrequent traffic of Enhanced Mobile Broadband (eMBB) such as background traffic generated from eMBB applications, and Ultra-Reliable Low-Latency Communication (URLLC) services as well.

The UE in the RRC_INACTIVE state can move within an area configured by RAN without any notification (i.e. RAN Notification Area (RNA)) and using a unique identifier: Inactive-Radio Network Temporary Identifier (I-RNTI). This RNA can cover a single or multiple cell(s) and shall be contained within a CN registration area. A RAN-based Notification Area Update (RNAU) procedure is run by the UE periodically and when the UE re-selects a cell that does not belong to the configured RNA. It should be noted that the UE maintains a configuration for the RRC_INACTIVE state as received from a RAN network node. Said configuration comprises at least information on the RNA assigned for the UE. Said configuration may also comprise information on an anchor access node (i.e. the last serving network node) of the UE, e.g., implicitly based on the I-RNTI that was assigned by the anchor network node. The information on the RNA may comprise, for example, a list of cells configured as part of said RNA and/or a list of RAN-area codes (RANAC) associated with said RNA.

When the UE is moved to the RRC_INACTIVE state via an RRC Connection Suspend message, a UE AS context, necessary for the quick resume of the full RRC connection, is maintained both at the UE side and RAN side. It is noted that, at the RRC connection resume (simply referred to as resume thereafter), the UE is identified by the I-RNTI. The UE AS context contains, for instance, bearer configuration parameters according to the latest RRC configuration and AS security context pointing to integrity protection and ciphering algorithms and AS keys. Based on the latter, the UE is capable of deriving (short) Message Authentication Code - Integrity (MAC-I) field to be used as an authentication token, and is included in a request message the UE in the RRC_INACTIVE state sends to the RAN when it wants to send signalling or data.

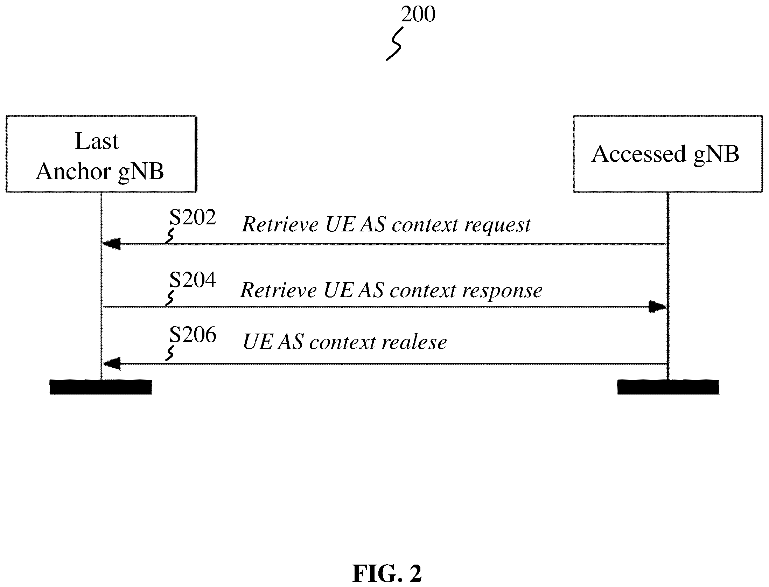

FIG. 2 shows a typical interaction diagram 200 for transferring the UE AS context from a last anchor gNB to an accessed gNB. The accessed gNB is a network node which is accessed by the UE in the RRC_INACTIVE state. In particular, the UE sends a resume request to the accessed gNB, i.e. a request for resuming the RRC_CONNECTED state from the RRC_INACTIVE state. To perform such transition, the accessed gNB triggers the legacy XnAP Retrieve UE AS context procedure to receive the UE AS context from the last anchor gNB. More specifically, the accessed gNB sends, in a step S202, a Retrieve UE AS context request to the last anchor gNB, and receives, in a step S204, a Retrieve UE AS context response from the last anchor gNB. After that, the accessed gNB becomes a new anchor gNB, and instruct, in a step S206, the last anchor gNB to release the UE AS context. Upon reception of such an instruction, the last anchor gNB can release radio and user/control plane related resources associated with the UE AS context, including CN resources (e.g. a NG Application Protocol (NGAP) Path Switch Request procedure upon context relocation can take place as well). After that, the interaction diagram 200 ends up.

However, such a context retrieval procedure may result in a significant resume latency primarily caused by an Xn-interface latency. This may affect the performance of services characterized by low latency requirements. One category of such services which are envisioned to be supported by the 5G communication technology includes URLLC services. The URLLC services refer to future applications which require reliable data communications from one end to another, while fulfilling ultra-low latency constraints. The URLLC services are required for latency sensitive devices for applications like factory automation, autonomous driving, and remote surgery. With that said, the data exchange between the UE and the DN should be fast and reliable as much as possible, so that the UE may use the URLLC services. Additionally, such additional latency may be deleterious also for other traffic categories, such as eMBB.

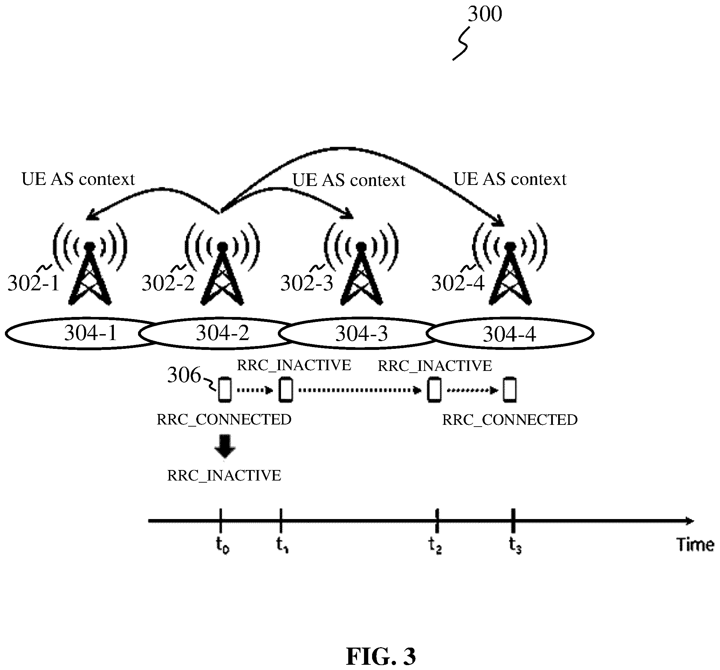

FIG. 3 schematically illustrates one possible workaround for the above problem. More specifically, a NG RAN 300 consists of the following four network nodes: a gNB 302-1 serving a cell 304-1, a gNB 302-2 serving a cell 304-2, a gNB 302-3 serving a cell 304-3, and a gNB 302-4 serving a cell 304-4. Assuming that a UE 306 transits from the RRC_CONNECTED state to the RRC_INACTIVE state within the cell 304-2 at a time $t_0$. In this case, the gNB 302-2 is considered as a last anchor gNB, i.e. it anchors the UE AS context. To minimize the resume latency, the gNB 302-2 may send the UE AS context of the UE 306 to each of the gNBs 302-1, 302-3, and 302-4, so that they could be provided in advance with the UE AS context next time when the UE 306 decides to initiate data transfer, which in turn requires resuming the RRC_CONNECTED state in this example. As shown in FIG. 3, the UE 306 remains the RRC_INACTIVE state at next times $t_1$ and $t_2$ when passing through the cell 304-3, and requests the resume of the RRC_CONNECTED state at a time $t_3$ when located in the cell 304-4. In other words, the gNB 302-4 should be considered as a new anchor gNB for the UE 306.

Thus, the above-described workaround may indeed reduce the resume latency as any of the gNBs 302-1, 302-3, and 302-4 in the NG RAN 300 will avoid the legacy XnAP Retrieve UE AS context procedure at the time when the UE 306 requests the resume of the RRC_CONNECTED state. However, pushing the UE AS context from the last anchor gNB 302-2 to all the gNBs 302-1, 302-3, and 302-4 in the NG RAN 300 increases both the Xn signalling overhead (i.e. useless UE AS context transfer to the gNBs 302-1, 302-3 where the UE 306 will not request the resume of the RRC_CONNECTED state) and the storage capacity overhead to store the UE AS context in any gNB. These overheads could be especially adverse in the MIoT and mMTC applications.

It should be noted that a similar network signalling overhead issue - i.e. similar to the signalling overhead due to the UE AS context retrieval procedure as explained above for the UE-initiated resume of the active RAN connection state (for uplink data transfer) - is present in case of the network-initiated resume of the active RAN connection state (for downlink data transfer) and similarly for downlink small data transfer without an RRC state change. In this case, the anchor network node needs to perform RAN paging through every cell in the RNA, since the location of the UE is only known at an RNA area level (but not at a cell level). This may result in a large network signalling overhead, which is not desirable especially if the RNA area comprises a large number of cells.

The example embodiments disclosed herein provide a technical solution that allows mitigating or even eliminating the above-sounded drawbacks peculiar to the prior art. In particular, the technical solution involves:

- identifying, based on UE-specific data (such, for example, as mobility information, a traffic profile), one or more relevant network nodes where the UE could be located at the time of initiating next data transfer (and this data transfer may either require resuming the active RAN connection state of the UE, or be performed when the UE is in the suspended RAN connection state); and
- sending the access context from the anchor network node to said one or more relevant network nodes.

Said one or more relevant network nodes are referred to herein as target network nodes. By sending the access context in this manner, one may significantly minimize the network signalling overhead and the storage capacity overhead, as well as reduce the resume latency for the UE.

The above-described general concept of the technical solution may be used both in an uplink scenario and a downlink scenario. The uplink scenario corresponds to the UE-initiated resume of the active RAN connection state to perform uplink data transfer, or to the uplink data transfer without changing the RAN connection state (i.e. from the suspended RAN connection state). The uplink scenario takes place when the UE has uplink data to transmit. The downlink scenario corresponds to the network-initiated resume of the active RAN connection state to perform downlink data transfer, or to the downlink data transfer without changing the RAN connection state (i.e. from the suspended RAN connection state). The downlink scenario takes place when the last anchor network node has downlink data for the UE and needs to find its potential location. Each of the uplink and downlink scenarios will be now described in more detail with reference to the accompanying figures.

Uplink scenario

In the uplink scenario, the following predictions should be made:

- *when* the UE could have uplink data for next transmission (which, in turn, could cause the UE to request the resume of the active RAN connection state or initiate the so-called small data transmissions from the suspended RAN connection state), and

- *where* the UE could be located at that time (i.e. in which network node(s)/cell(s) within the RNA).

The above predictions may then be used as follows: The anchor network node will proactively transfer the access context (for example, the UE AS context in terms of the RRC protocol) of the UE to one or more target network nodes *before* the UE initiates the next data transfer, thus minimizing signaling overhead and additionally avoiding the access context retrieval latency. Thus, the access context transfer will be triggered only for said one or more predicted network nodes in the RAN (i.e. some network nodes in the RNA but not all). Similarly, the target network node(s) may initiate the retrieval of the access context before the UE requests the next data transfer.

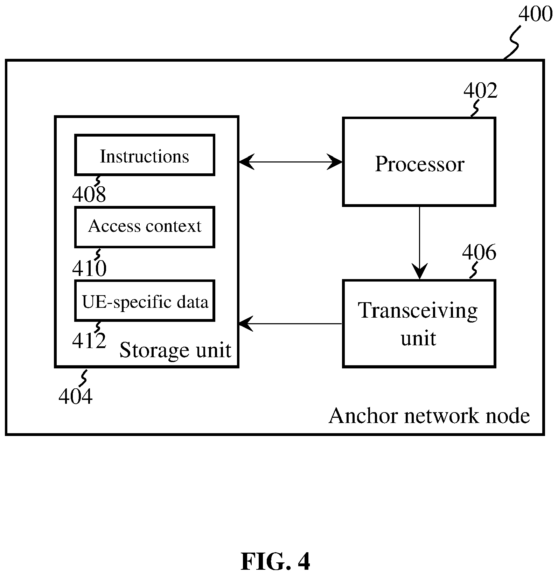

FIG. 4 shows a block-scheme of an anchor network node 400 capable of implementing the uplink scenario in accordance with one example embodiment. As shown in FIG. 4, the anchor network node 400 comprises at least the following constructive elements: a processor 402, a storage unit 404, and a transceiving unit 406. The storage unit 404 is coupled to the processor 402 and stores processor-executable instructions 408 which, when executed by the processor 402, cause the processor 402 to perform the aspects of the present disclosure, as will be explained later. The storage unit 404 further comprises: an access context 410 required to initiate the data transfer when the UE, such, for example, as the UE 306 shown in FIG. 3, is in the suspended RAN connection state; and UE-specific data 412 relating to the UE. In particular, the UE-specific data 412 may comprise mobility information and/or a traffic profile both relating to the UE. It should be noted that the number, arrangement and interconnection of the constructive elements constituting the anchor network node 400, which are shown in FIG. 4, are not intended to be any limitation of the present disclosure, but merely used to provide a general idea of how the constructive elements may be implemented within the anchor network node 400. In one other exemplary embodiment, the transceiving unit 406 may be implemented as two individual devices, with one for receiving operations and another for transmitting operation. Irrespective of its implementation, the transceiving unit 406 is implied to be capable of performing different operations required to perform the reception and transmission of different signals, such, for example, as signal modulation/demodulation.

The processor 402 may be implemented as a central processing unit (CPU), general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 402 may be implemented as any combination of one or more of the aforesaid. As an example, the processor may be a combination of two or more microprocessors.

The storage unit 404 may be implemented as a nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 408 stored in the storage unit 404 may be configured as a computer executable code which causes the processor 402 to perform the aspects of the present disclosure. The computer executable code for carrying out operations or steps for the aspects of the present disclosure may be written in any combination of one or more programming languages, such as Java, C++, or the like. In some examples, the computer executable code may be in the form of a high level language or in a pre-compiled form, and be generated by an interpreter (also pre-stored in the storage unit 404) on the fly.

The mobility information that may be included in the UE-specific data 412 in the uplink scenario may be configured as follows. The mobility information may comprise Radio Resource Management (RRM) measurements, a UE mobility state, a list of the best neighbor cells for the UE and network nodes belonging to the best neighbor cells, or any combination thereof. The RRM measurements taken by the UE may comprise at least the following measurements: Channel State Indicator (CSI), Channel Quality Indicator (CQI), Reference Signal Received Power (RSRP), Reference Signal Received Quality (RSRQ), and Carrier Received Signal Strength Indicator (RSSI), Signal-to-Noise-and-Interference Ratio (SINR). The mobility state may indicate whether the UE is stationary, non-stationary, slow-moving, or fast-moving (which may be determined based on a UE movement speed).

The traffic profile that may be included in the UE-specific data 412 in the uplink scenario, either instead of or in addition to the mobility information, may comprise a traffic distribution (for example, traffic arrival of one or more applications) over time. This profile may be learnt, e.g., based on the traffic profile experienced before suspending the active RAN connection state of the UE. Besides the user plane data above, the traffic profile may also comprise control plane data, such, for example, as a periodic RNA update message where the UE may notify its presence and location to the network (with or without a resume of the active RAN connection state).

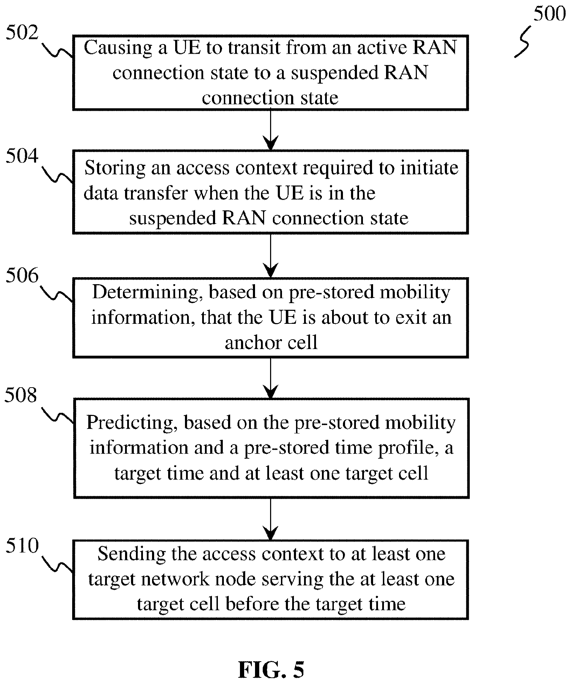

FIG. 5 shows a flowchart of a method 500 for operating the anchor network node 400 in accordance with one exemplary embodiment. In this example embodiment, it is assumed that the UE-specific data 412 is defined by the combination of the mobility information and the traffic profile. Each of the steps of the method 500 is performed by corresponding one of the above-described constructive elements constituting the anchor network node 400. The method 500 starts with a step S502, in which the processor 402 cause the UE to transit from the active RAN connection state to the suspended RAN connection state. In an alternative example embodiment, the UE may perform such transition by itself. After that or in parallel, the storage unit 404 may store, in a step S504, the access context 410 required to initiate, in future, the data transfer from the suspended RAN connection state of the UE. Further, the method 500 proceeds to a step S506, in which the processor 402 determines, based on the pre-stored mobility information, that the UE is about to exit an anchor cell. In this case, the anchor cell is implied as a cell served by the anchor network node 400. Next, in a step S508, the processor 402 predicts, based on the pre-stored mobility information and a pre-stored time profile, a target (next) time when the UE is about to initiate the data transfer (which may request resuming the active RAN connection state), and at least one target cell in which the UE would appear to be located at the target time. The method 500 ends up with a step S510, in which the processor 402 instruct the transceiving unit 406 to send the access context 410 to at least one target network node serving the at least one target cell before the target time.

In one example embodiment, the processor 402 is configured to prepare configuration information, according to which the UE should report the mobility information and the traffic profile at least one time before or after initiating each data transfer from the suspended or active RAN connection state. For example, the processor 402 may instruct the transceiving unit 406 to send the configuration information to the UE when the UE is in the active RAN connection state. The UE may, in turn, report the mobility information and the traffic profile, e.g., as part of a Message 3 (Msg3) or Message 5 (Msg5) (for example, as part of the RRC resume request or RRC resume complete messages in terms of the RRC protocol). The transceiving unit 406 may further be configured to receive the mobility information and the traffic profile reported by the UE and provide them to the storage unit 404, so that they may be used further in the method 500.

In one example embodiment, the RRM measurements comprise the RSRP of the anchor cell served by the network node 400. In this case, the processor 402 may determine, in the step S506, that the UE is about to exit the anchor cell if the UE mobility state is set to be non-stationary (i.e. the UE is moving) and the RSRP of the anchor cell is less than a threshold at the time when the active RAN connection state has been suspended. The latter means that the UE is at the edge of the anchor cell (i.e. there is a risk that the UE will perform cell reselection).

In one other example embodiment, the RRM measurements comprise the RSRP that is the highest among RSRPs of the best neighbor cells. In this case, the processor 402 may determine, in the step S506, that the UE is about to exit the anchor cell if the UE mobility state is set to be non-stationary (i.e. the UE is moving) and the highest RSRP is more than a threshold at the time when the active RAN connection state has been suspended. Similarly, the latter means that the UE is at the edge of the anchor cell (i.e. there is again a risk that the UE will perform cell reselection).

In one more other example embodiment, the processor 402 is configured to determine, in the step S506, that the UE is about to exit the anchor cell if the UE mobility state has changed from stationary to non-stationary. In other words, if the last mobility information stored in the storage unit 404 is indicative of the stationary UE mobility state, and if the transceiving unit 406 receives new mobility information according to which the UE mobility state is no longer stationary, the processor 402 may decide that the UE is going to exit the anchor cell.

It should be noted that, in the embodiments disclosed herein, the stationarity of the UE may be also determined based on changes of the RSRP in time, i.e. if the RSRP does not change more than a certain delta in time, then the UE is stationary. Other means may also be adopted for this determination, as should be apparent to those skilled in the art.

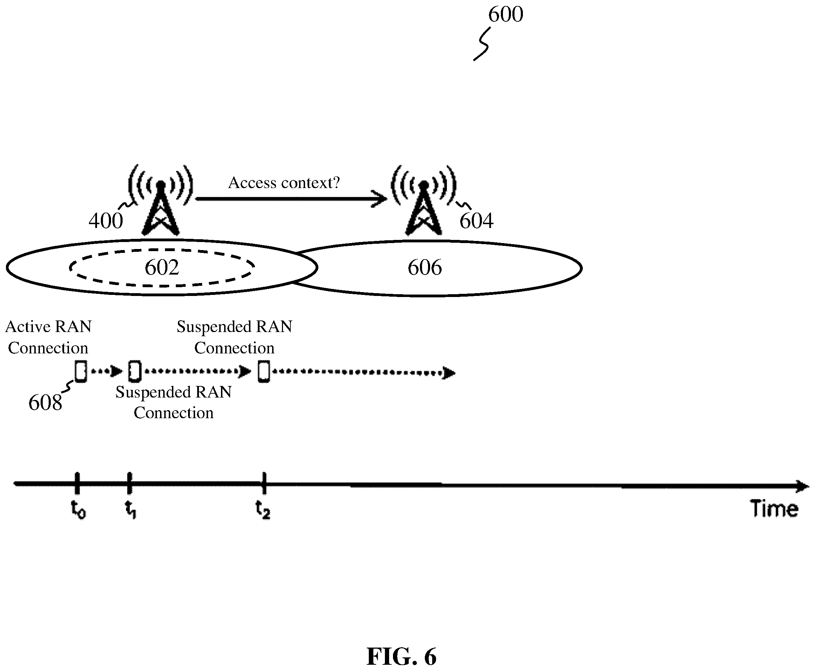

FIG. 6 shows one example of how to perform the step S506, i.e. how to determine that the UE is about to exit the anchor cell. As shown in FIG. 6, a RAN 600 consists of two network nodes: the anchor network node 400 serving an anchor cell 602 and a network node 604 serving a cell 606. A dashed area inside the anchor cell 602 is defined by a RSRP threshold. A UE 608 is initially (at a time $t_0$) located in the anchor cell 602 in the active RAN connection state. Let us now assume that, at a time $t_1$, the anchor network node 400 causes the UE 608 to transit to the suspended RAN connection state, and decides that the UE 608 is not going to leave the anchor cell 602 due to its mobility state "slow-moving" and the high RSRP of the anchor network node 400 (i.e. since the UE 608 is within the dashed area, the RSPR of the anchor network node 400 is more than the RSPR threshold). Further, at a time $t_2$, the anchor network node 400 determines that the UE 608 is about to leave the anchor cell 602, because the UE 608 is outside the dashed area, i.e. the RSRP of the anchor network node 400 is less than the RSRP threshold, and its mobility state has changed to "fast-moving". In this case, the anchor network node 400 may proceed to the step S508 of the method 500 to determine the target time when the next data transfer is likely initiated by the UE 608, and at least one target cell in which the UE 608 would appear to be located at the target time. To do this, the anchor network node 400 should consider the mobility information together with the traffic profile, as will be explained below.

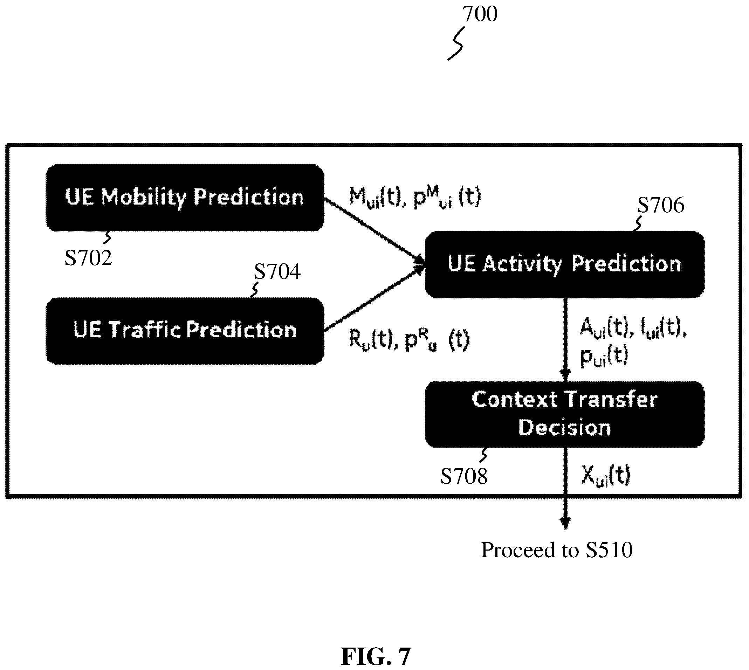

FIG. 7 shows a flowchart 700 for implementing the step S508 of the method 500 in accordance with one example embodiment. The flowchart 700 comprises substeps S702-S708, all of which may be performed by the processor 402 of the anchor network node 400. In the meantime, the substeps S702 and S704 may be executed by the processor 402 in parallel or in sequence. The substep S702 is aimed at predicting a UE mobility $M_{ui}(t)$ of each UE u at a time t, i.e. when a UE u is within a cell i, and a probability distribution $p^M_{ui}(t)$ of the UE mobility prediction. The substep S704 is aimed at predicting traffic profile $R_u(t)$ of each UE u at the time t, i.e. the amount of traffic the UE u has to send at time t, and a probability distribution $p^R_u(t)$ of the traffic profile prediction. The substep 706 is aimed at computing discrete functions indicating a UE activity, namely its occurrence $I_{ui}(t)$ and duration $A_{ui}(t)$, for each UE u and a probability distribution $p_{ui}(t)$ of each UE activity based on the predictions made in the steps S702 and S704. The last substep 708 is aimed at making a decision $X_{ui}(t)$ on whether the access context of the UE u is to be transferred to the target network node i at the time t. Each of the above functions will be now described in more detail.

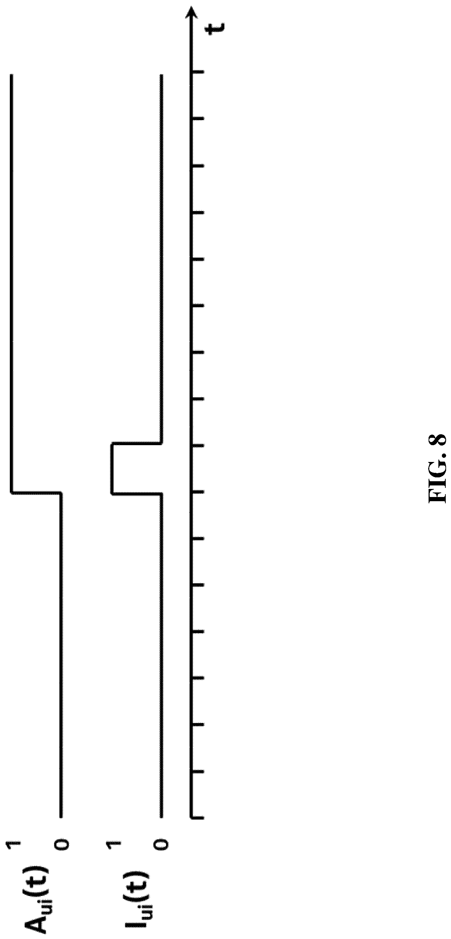

FIG. 8 illustrates the discrete functions $I_{ui}(t)$ and duration $A_{ui}(t)$ that model the UE activity of the UE u. As noted above, the function $A_{ui}(t)$ indicates the activity duration of the UE u in the target network node i, while the function $I_{ui}(t)$ takes value 1 only when the UE u becomes active (e.g. having data to delivery to the RAN). As shown in FIG. 8, the function $A_{ui}(t)$ is equal to 1 only when the function $M_{ui}(t)$ indicates that the UE u is in the target network node i and the function $R_u(t)$ indicates the amount of traffic UE u has to transmit at the time t. To this end, the function $M_{ui}(t)$ may be defined as follows:

$$M_{ui}(t) = \begin{cases} 1 & \text{if UE u is in the network node i at time t} \\ 0 & \text{otherwise} \end{cases}.$$

As for the function $R_u(t)$, it can provide a data rate of the UE u at the time t: $R_u(t) \in \mathbb{R}_+$, where $\mathbb{R}_+$ is the set of positive real numbers. By merging these two functions, the function $A_{ui}(t)$ can be computed.

This deterministic model for the UE activity prediction can be extended to capture uncertainties of the mobility information and the traffic profile, for example, by estimating the probability distributions $p^M_{ui}(t)$ and $p^R_u(t)$. Given the aforesaid for the functions $M_{ui}(t)$ and $R_{ui}(t)$, the probability that the UE u is in the target network node i at the time t:

$$P(M_{ui}(t)=1)=p_{ui}^{M}(t)\in[0,1]$$ , and the probability that the UE u has traffic to transmit at time t:

$$P(R_u(t)>0)=p_u^{R}(t)\in[0,1]$$ . From these probability distributions, one can compute $P(I_{ui}(t)=1)=p_{ui}(t)\in[0,1]$, which means the probability that UE u becomes active in the target network node i at the time t (i.e. it needs to initiate the data transfer from the suspended RAN connection state).

Table 1 provides the main parameters which may be used to find the function $X_{ui}(t)$ in the substep S708.

*Table 1 - Main parameters input to the PFD module*

| Parameter | Description |
|---|---|
| $U$ | Set of UEs in the suspended RAN connection state |
| $N$ | Set of network nodes in the same RAN |
| $T$ | Set of timeslots |
| T | Duration of a timeslot |
| H | Number of timeslots in the set T |
| E | Set of logical links connecting the network nodes though the Xn interface |
| $L_u$ | Size of the access context of the UE u∈U (in bits) |
| $b_e$ | Bandwidth of the logical link e∈E (in b/s) |
| $m_i$ | Memory capacity of the network node i for storing the access context (in bits) |
| $k(u)\in N$ | Anchor network node of the UE u. Function k: $U \to N$ maps UEs to their corresponding network nodes |
| $s(e)\in N$ | Source network node of the logical link e of the Xn interface |
| $t(e)\in N$ | Target network node of the logical link e of the Xn interface |
| $D_{k(u)i}$ | Latency to transfer the access context of the UE u from the anchor network node to the target network node i. It is defined by the delay of the retrieval procedure triggered by the target network node to receive the access context from the anchor network node. |

In one example embodiment, the function $X_{ui}(t)$ is computed by solving an optimization problem. Such an optimization problem should be construed in accordance with its definition in mathematics. In other words, the optimization problem used herein may generally consist in maximizing or minimizing a real function by systematically choosing input values from within an allowed set and computing the value of the function. One non-limitative example of the optimization problem, which may be used to compute the function $X_{ui}(t)$, is the following Mixed Integer Linear Programming (MILP) problem:

$$\min \sum_{\tau\in\mathcal{T}} \sum_{t\in\mathcal{T}:t<\tau} \sum_{u\in\mathcal{U}} \sum_{i\in\mathcal{N}} (1 - X_{ui}(t)) D_{k(u)i} I_{ui}(\tau) \qquad (1)$$

s. t.:

$$\sum_{t\in\mathcal{T},i\in\mathcal{N}} X_{ui}(t) \le 1 \qquad \forall u \in \mathcal{U}, i \in \mathcal{N} \qquad (2)$$

$$\sum_{u\in\mathcal{N}:k(u)=s(e)} X_{ut(e)}(t)\frac{L_u}{T} \leq b_e \qquad \forall t \in \mathcal{T}, e \in \mathcal{E} \qquad (3)$$

$$\sum_{t\in\mathcal{T},u\in\mathcal{U}} X_{ui}(t)L_u \leq m_i \qquad \forall i \in \mathcal{N} \qquad (4)$$

$$X_{ui}(t) \in \{0,1\} \qquad \forall u \in \mathcal{U}, i \in \mathcal{N}, t \in \mathcal{T} \qquad (5)$$

In particular, the objective function (1) represents the overall delay experienced by the UE in the suspended RAN connection state due to the access context transfer from the anchor network node 400 when initiating the data transfer from the suspended RAN connection state. The goal of the whole flowchart 700 (or the step S508 of the method 500) is to schedule the transfer decisions of the access context before the UEs in the suspended RAN connection state start initiating the data transfer from the suspended RAN connection state. The set of constraints (2) forces the transfer of the access context of the UE u to a specific target network node at most one time. The set of constrains (3) model the capacity constraints of the logical link connecting the target network nodes through the Xn interface, while the set of constraints (4) limits the number of the access context that may be stored in a memory of each target network node for this purpose.

In one other example embodiment, the function $X_{ui}(t)$ is obtained by implementing a priority scheduling algorithm (for example, greedy algorithm) which, at any decision time, uses a policy similar to the Earliest Deadline First (EDF) policy to select the UEs in the suspended RAN connection state whose access context is sent to the next target network node where the active RAN connection state will likely be resumed. The algorithm takes as inputs the same parameters as those illustrated in FIG. 8 and provides as an output the scheduling decisions for transferring the access context from the anchor network node 400 to the target network nodes. The algorithm itself may be implemented as the following pseudo code:

---

**Algorithm**    Calculate $\forall u \in \mathcal{U}, i \in \mathcal{N}, t \in \mathcal{T}, X_{ui}(t)$

---

**Require:** $\forall u \in \mathcal{U}, i \in \mathcal{N}, \tau_u^i \in \mathcal{T}$
**Require:** $t \in \mathcal{T}, e \in \mathcal{E}, b_e(t) \leftarrow b_e$
  $t \leftarrow 0$
  **repeat**
    $Q \leftarrow \{(u,i) : u \in \mathcal{U} \wedge i \in \mathcal{N} \wedge \tau_u^i > t \wedge \nexists t \in \mathcal{T}, X_{ui}(t) = 1\}$
    Sort $Q$ in non-decreasing order of $\tau_u^i$
    **repeat**
      $(u,i) \leftarrow \text{pop}(Q)$
      $e \leftarrow (k(u), i)$
      **if** $b_e(t) - \frac{L_u}{T} \geq 0 \wedge m_i - L_u \geq 0$ **then**
        $b_e(t) \leftarrow b_e(t) - \frac{L_u}{T}$
        $m_i \leftarrow m_i - L_u$
        $X_{ui}(t) \leftarrow 1$
      **end if**
    **until** $Q \neq \emptyset$
    $t \leftarrow t + 1$
  **until** $t \neq \mathcal{H}$

---

More specifically, at each time instant, the above algorithm selects the UEs that will become active in the future in any target network node and transfer their access context. If there is not enough bandwidth on the logical link connecting the anchor and target network nodes, the algorithm selects only the UEs with the earliest activation time. The earliest activation time of UE uEU in the target network node iGN is defined as follows:

$$\tau_u^i = \min\{\tau \in T : I_{ui}(\tau) > 0\}.$$

The earliest activation time simply denotes the time instant during a decision horizon when the UE u initiates the data transfer, for example, by switching from the suspended RAN connection state to the active RAN connection state in a particular target network node i. The algorithm stores in a queue Q all UEs in the suspended RAN connection state and future serving network nodes for which the earliest activation time is not over yet ( $\tau_u^i > t$ ) and no access context transfer has been decided yet ($\nexists t \in T : X_{ui}(t)=1$). The queue is sorted in non-decreasing order of the earliest activation time in order to give priority to the UEs with the earliest activation time.

After deciding for the access context transfer for a specific pair (u, i) (i.e. the UE u and the target network node i), the above algorithm verifies the following capabilities before the actual transfer: If the residual bandwidth $b_{k(u),i}(t)$ of the logical link connecting the anchor network node k(u) and the next serving network node i as well as the residual memory $m_i$ of the next serving network node i are enough to transfer and store the access context of size $L_u$.

In one more other embodiment, the function $X_{ui}(t)$ is obtained by exploiting the probability distributions $p^M_{ui}(t)$ and $p^R_u(t)$ to cope with the uncertainties of the mobility information and the traffic profile reported, for example, by the UE or any other network node(s). In particular, a MILP problem similar to the one described above may be solved, where the objective function (1) is replaced with the expectation of the overall delay experienced by the UEs due to the missing access context. More specifically, a new objective function is given as follows:

$$\sum_{w \in T} \sum_{\tau \in T} \sum_{t \in T : t < \tau} \sum_{u \in U} \sum_{i \in N} (1 - X_{ui}(t)) D_{k(u)i} I_{ui}(\tau) p_{ui}(w).$$

The outermost summation of this new objective function represents the expectation according to the probability distributions estimated in the substep S706 of the flowchart 700.

The above greedy algorithm can be also extended to consider the probability distributions $p^M_{ui}(t)$ and $p^R_u(t)$ to decide when to schedule the access context transfer under uncertain knowledge of the mobility information and the traffic profile. To this end, at a decision time t, the queue Q is filled with any pair (u, i) (i.e. the UE u and the target network node i) for which the probability that UE u is active in the target network node i in the future is larger than zero ($\exists \tau \in T : \tau > t : p_{ui}(\tau) > 0$). The queue Q is therefore defined as follows:

$$Q \leftarrow \left\{(u,i) : u \in U \wedge i \in N \wedge (\exists \tau \in T : \tau > t : p_{ui}(\tau) > 0) \wedge \nexists t \in T : X_{ui}(t)=1 \right\}$$

The rest of the pseudo code does not change.

In general, the flowchart 700 that is eventually aimed at deciding when (i.e. the time) and where (i.e. the target network node) to trigger/schedule the access context transfer, i.e. obtaining the function $X_{ui}(t)$, may be implemented at the following locations of the RAN:

(a) at a centralized node in the RAN; and

(b) at the anchor network node 400.

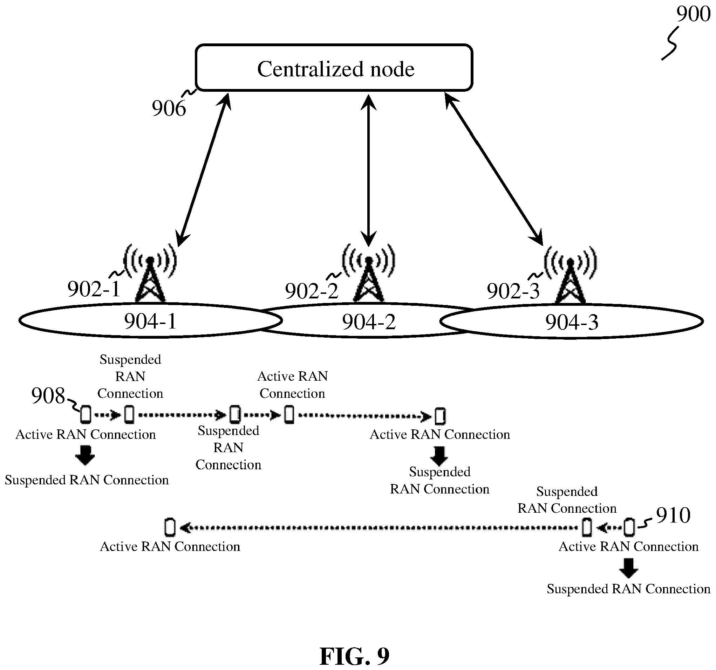

FIG. 9 schematically illustrates case (a). More specifically, FIG. 9 shows a RAN 900 comprising the following three network nodes: a network node 902-1 serving a cell 904-1, a network node 902-2 serving a cell 904-2, and a network node 902-3 serving a cell 904-3. The RAN 900 further comprises a centralized node 906 which may be implemented, for example, as a remote server or administration center. Each of the network nodes 902-1, 902-2, and 902-3 may function as the anchor network node 400 or as a target network node at a certain time during the movements of UEs 908 and 910 within the RAN 900. However, in this case, the steps S506 and S508 of the method 500 and, correspondingly, the flowchart 700 are executed by the centralized node 906 rather than the processor 402.

As an example, let us now consider an initial time when the network node 902-1 functions as the anchor network node 400 for the UE 908 and the network node 902-3 functions as the anchor network node 400 for the UE 910. In this case, the centralized node 906 receives, from the network nodes 902-1 (902-3), an indication that the UE 908 (910) has transitioned from the active RAN connection state to the suspended RAN connection state, as well as the UE-specific data 412 (i.e. the mobility information and the traffic profile) and the UE I-RNTI assigned by the network node 902-1 (902-3). After that, the centralized node 906 determines that the UE 908 (910) is about to exit the cell 904-1 (904-3) and predicts one of the following two time instants (by using the flowchart 700):

(I) a time instant when a target network node (i.e. the network node 902-2 in case of the UE 908 and the network node 902-1 in case of the UE 910) should initiate an access context retrieval procedure for the UE 908 (910) with the anchor network node 902-1 (902-3) by using the existing Xn signaling (Retrieve UE context request/response). This time instant is communicated to the target network node; or

(II) a time instant when the anchor network node 902-1 (902-3) should push the access context by using the existing Xn signaling. This time instant is communicated to the anchor network node 902-1 (902-3).

Depending on which of time instants (I) and (II) is predicted, one of the following outcomes is possible:

- in case of time instant (I), the target network node triggers the access context retrieval procedure with the anchor network node 902-1 (903-1) any time before time instant (I) communicated by the centralized node 906; or
- in case of time instant (II) (more preferred), the anchor network node 902-1 (902-3) pushes the access context any time before time instant (II) communicated by the centralized node 906.

The aforesaid may equally be applied to the case when the network node 902-2 itself functions as the anchor network node 400 for the UE 908.

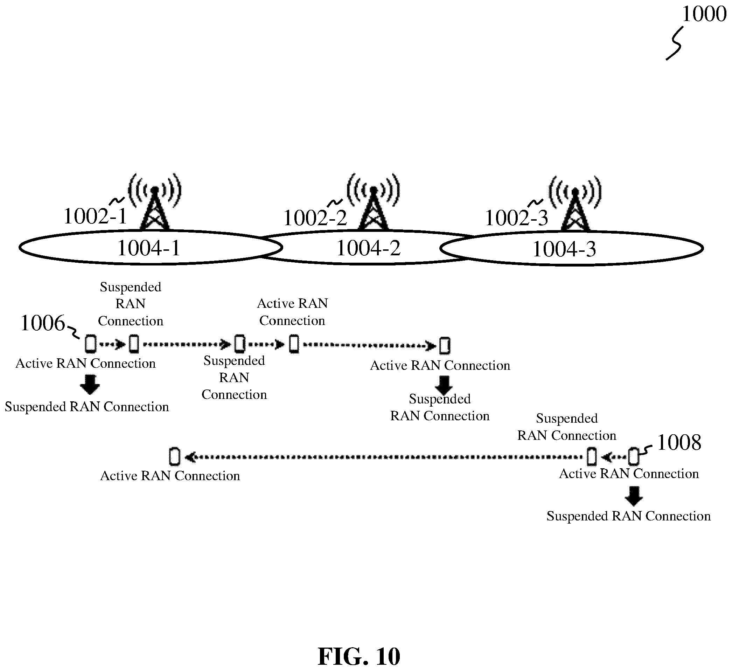

FIG. 10 schematically illustrates case (b). More specifically, FIG. 10 shows a RAN 1000 comprising the following three network nodes: a network node 1002-1 serving a cell 1004-1, a network node 1002-2 serving a cell 1004-2, and a network node 1002-3 serving a cell 1004-3. Each of the network nodes 1002-1, 1002-2, and 1002-3 may function as the anchor network node 400 or as a target network node at a certain time during the movements of the UEs 1006 and 1008 within the RAN 1000. In this case, the steps S506 and S508 of the method 500 and, correspondingly, the flowchart 700 are executed by the processor 402.

As an example, let us now consider an initial time when the network node 1002-1 functions as the anchor network node 400 for the UE 1006 and the network node 1002-3 functions as the anchor network node 400 for the UE 1008. In this case, the network node 1002-1 (1002-3) uses the UE-specific data 412 (i.e. the mobility information and the traffic profile) to determine that the UE 1006 (1008) is about to exit the cell 1004-1 (1004-3) and predicts when/to where the access context transfer should be initiated (by using the flowchart 700). After that, the network node 1002-1 (1002-3) may perform one of the following:

- It triggers a target network node (i.e. the network node 1002-2 in case of the UE 1006 and the network node 1002-1 in case of the UE 1008) to initiate the access context retrieval procedure. A proprietary (Xn-)message should, for instance, be implemented for this triggering. Upon such triggering, the target network node can use the existing Xn signaling for the access context retrieval.
- It pushes the access context using, e.g., a proprietary Xn signaling. Such access context pushing message (initiated by the anchor network node 1002-1 (1002-3)) could also be defined in the 3GPP standard for the Xn interface.

The aforesaid may equally be applied to the case when the network node 1002-2 itself functions as the anchor network node 400 for the UE 1006.

Referring again to FIG. 5, in some other example embodiments, the method 500 may be modified so as to be applicable in the cases when the UE-specific data 412 is constituted by only one of the mobility information and the traffic profile. Each of such example embodiments is briefly described below.

More specifically, if there is only the traffic profile pre-stored as the UE-specific data 412, the step S506 may be omitted, and the step 5508 may consist only in predicting, based on the pre-stored traffic profile, the target time when the UE is about to initiate the next data transfer (which may request resuming the active RAN connection state). Given this, the step S510 may consist in sending the access context 410 to all cells in the RNA prior to the predicted time. As noted above, the RNA update message may be part of the traffic profile too. It should also be noted that this example embodiment is feasible only if the UE is still in the suspended RAN connection state with the same anchor node at the predicted time, and the access context 410 is transferred to any network node in the RNA as composed at the predicted time (the RNA might have been updated, in principle, before the target time). By so doing, one may alleviate or even eliminate the above-discussed delay and signalling issues peculiar to the prior art solutions.

At the same time, if there is only the mobility information pre-stored as the UE-specific data 412, the step S506 remains in force, but the step 5508 may consist in predicting, based on the pre-stored mobility information, the target cell(s) where the UE will likely appear in the nearest future. For example, the target cells may be taken from the list of the best neighbor cells for the UE, and/or predicted based on the RRM measurements of the anchor cell and the neighbor cells. Given this, the step S510 may consist in sending the access context 410 to all network nodes serving the target cell(s) thus predicted, for example, immediately after the UE moves to the suspended RAN connection state in the anchor cell, if the signaling/storage capacity of the RAN allows doing that, or at the time when the next update to the mobility information occurs, if the signaling/storage capacity of the RAN is limited. By so doing, one may alleviate or even eliminate the above-discussed storage and signalling issues peculiar to the prior art solutions.

Downlink scenario

In the downlink scenario, the following prediction should be made:

-    *where* the UE could be located at the time when the RAN receives downlink data for the UE (i.e. in which network node(s)/cell(s) within the RAN).

The above prediction above may then be used as follows: The anchor network node of the UE can page the UE in the suspended RAN connection state selectively via one or more predicted cells, thus minimizing the network signaling overhead. Thus, the paging over the Xn interface will occur only via one or more relevant network nodes in the RAN (i.e. some network nodes in the RNA but *not* all).

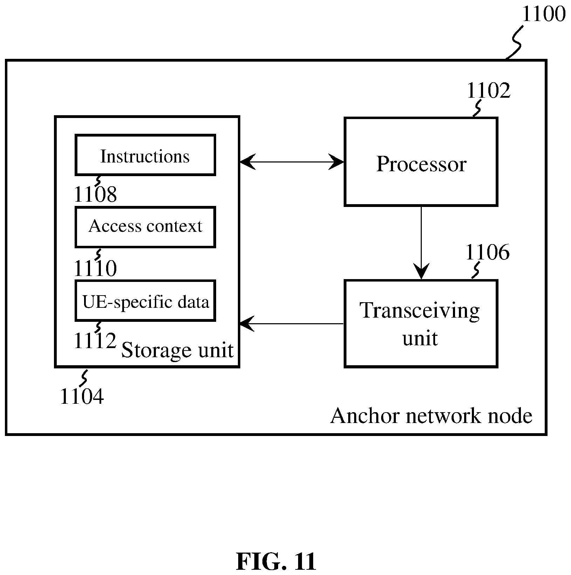

FIG. 11 shows a block-scheme of an anchor network node 1100 capable of implementing the downlink scenario in accordance with one example embodiment. As shown in FIG. 11, the anchor network node 1100 comprises at least the following constructive elements: a processor 1102, a storage unit 1104, and a transceiving unit 1106. The storage unit 1104 is coupled to the processor 1102 and stores processor-executable instructions 1108 which, when executed by the processor 1102, cause the processor 1102 to perform the aspects of the present disclosure, as will be explained later. The storage unit 1104 further comprises: an access context 1110 required to initiate data transfer when the UE (such, for example, as any one of the UE 306, 608, 908, 910, 1006, 1008 shown in FIGs. 3, 6, 9, and 10) is in the active or suspended RAN connection state; and UE-specific data 1112 relating to the UE. In particular, the UE-specific data 1112 may comprise mobility information and a traffic profile. At the same time, contrary to the uplink scenario, the traffic profile may not be considered in the downlink scenario. It should be noted that the number, arrangement and interconnection of the constructive elements constituting the anchor network node 1100, which are shown in FIG. 11, are not intended to be any limitation of the present disclosure, but merely used to provide a general idea of how the constructive elements may be implemented within the anchor network node 1100. In one other exemplary embodiment, the transceiving unit 1106 may be implemented as two individual devices, with one for receiving operations and another for transmitting operation. Irrespective of its implementation, the transceiving unit 1106 is implied to be capable of performing different operations required to perform the reception and transmission of different signals, such, for example, as signal modulation/demodulation.

It should also be noted that each of the processor 1102, the storage unit 1104, the transceiving unit 1106 and the processor-executable instructions 1108 may be implemented in the same or similar manner as corresponding one of the processor 402, the storage unit 404, the transceiving unit 406 and the processor-executable instructions 408 of the anchor network node 400 shown in FIG. 4. The same may also be said about the mobility information and the traffic profile: They may be configured as described above in the uplink scenario.

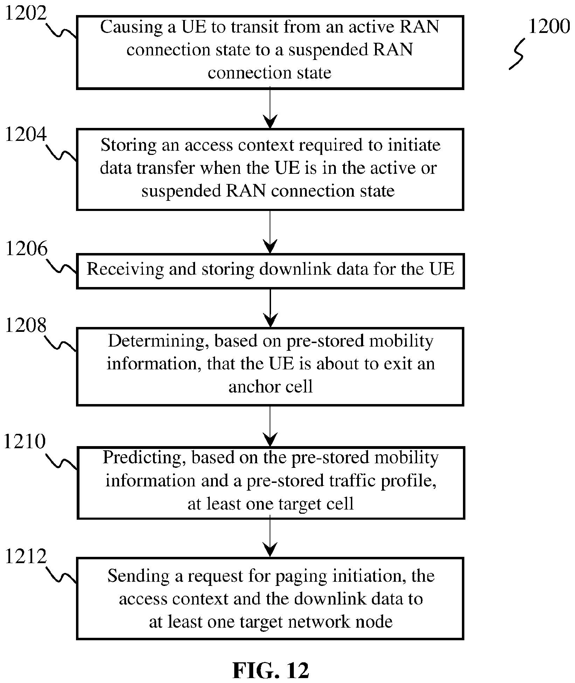

FIG. 12 shows a flowchart of a method 1200 for operating the anchor network node 1100 in accordance with one exemplary embodiment. Each of the steps of the method 1200 is performed by corresponding one of the above-described constructive elements constituting the anchor network node 1100. The method 1200 starts with a step S1202, in which the processor 1102 cause the UE to transit from the active RAN connection state to the suspended RAN connection state. In an alternative example embodiment, the UE may perform such transition by itself. After that or in parallel, the storage unit 1104 may store, in a step S1204, the access context 1110 required to initiate, in future, the data transfer when the UE is in the active or suspended RAN connection state. Further, the method 500 proceeds to a step S1206, in which the transceiving unit 1106 receives downlink data for the UE and the storage unit 1104 stores them for further use. Next, in a step S1208, the processor 1102 determines, based on the pre-stored mobility information, that the UE is about to exit an anchor cell. In this case, the anchor cell is implied as a cell served by the anchor network node 1100. The method 1200 then proceeds to a step S1210, in which the processor 1102 predicts, based on the pre-stored mobility information and the pre-stored traffic profile, at least one target cell in which the UE would appear to be located subsequently, i.e. upon exiting the anchor cell. The method 1200 ends up with a step S1212, in which the processor 1102 instructs the transceiving unit 1106 to send a request for paging initiation, the access context 1110 and the downlink data to at least one target network node serving the at least one target cell, so that the at least one target network node could page the UE to deliver the downlink data to the UE. It should be noted that the request for paging initiation is a request for causing the target network node(s) to initiate a paging procedure, i.e. send paging messages within its or their target cell(s), with each paging message being used to "wake up" the UE and indicate that there is some downlink data for it. It is noted that before the paging indication, the network may send a "wake-up signal" and/or "wake-up indication" for UE power saving purposes to indicate an upcoming paging message.

Different example embodiments of the method 1200 are similar to those discussed above in respect to the method 500, except that the traffic profile is not used therein. For example, the steps S1210 of the method 1200 may also be executed by using the flowchart 700. Moreover, the steps S1208 and S1210 may similarly be executed by different locations, as described above with reference to FIGs. 9 and 10.

Embodiments described in connection with Figures 10 to 12 are not covered by the subject-matter of the claims.

It should be noted that each block or operation of the methods 500, 1200 and the flowchart 700, or any combinations of the blocks or operations, can be implemented by various means, such as hardware, firmware, and/or software. As an example, one or more of the blocks or operations described above can be embodied by processor executable instructions, data structures, program modules, and other suitable data representations. Furthermore, the processor executable instructions which embody the blocks or operations described above can be stored on a corresponding data carrier and executed by at least one processor implementing functions of the anchor network node 400 or 1100, respectively. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made therein, without departing from the scope of legal protection which is defined by the appended claims. In the appended claims, the word "comprising" and its derivatives does not exclude other elements or operations, and the indefinite article "a" or "an" does not exclude a plurality. The mere fact that certain measures are recited in mutually different dependent claims does not indicate that a combination of these measures cannot be used to advantage.

**Claims**

1. An anchor network node (400) comprising:

    means (404) for storing (504):

        - an access context (410) required to initiate data transfer when a user equipment, UE, is in a suspended Radio Access Network, RAN, connection state; and
        - mobility information relating to the UE;

    means for determining (506), based on the mobility information, that the UE is about to exit an anchor cell served by the anchor network node (400);
    means for predicting (508), based on the mobility information, a target time when the UE is about to initiate the data transfer, and at least one target cell in which the UE would appear to be located at the target time; and
    means for sending (510) the access context to at least one target network node serving the at least one target cell before the target time,
    **characterized in that** the means (404) for the storing (504) are further configured to store (504) a traffic profile relating to the UE and **in that** the means for the predicting (402) are configured to perform the predicting (508) further based on the traffic profile.

2. The anchor network node (400) according to claim 1, further comprising:

    - means for acquiring the mobility information and the traffic profile at least one time before or after initiating each data transfer when the UE is in the suspended RAN connection state; and
    - means for providing the mobility information and the traffic profile to the means (404) for the storing (504) for their storage.

3. The anchor network node (400) according to claim 1 or 2, wherein the mobility information comprises Radio Resource Management, RRM, measurements, a UE mobility state, a list of the best neighbor cells for the UE and network nodes belonging to the best neighbor cells, or any combination thereof, and wherein the traffic profile comprises a traffic distribution over time, and/or an estimate of the traffic distribution over time to be expected after a suspension of an active RAN connection state comprising a timing of arrival of a next data traffic.

4. The anchor network node (400) according to claim 3, wherein the means for the determining (506) are configured to perform the determining (506) based on one of the following:

- when the RRM measurements comprise a Reference Signal Received Power, RSRP of the anchor cell, the UE mobility state is set to be non-stationary, and the RSRP of the anchor cell is less than a threshold at the time when the active RAN connection state has been suspended; or
- when the RRM measurements comprise a RSRP that is the highest among RSRPs of the best neighbor cells, the UE mobility state is set to be non-stationary, and the highest RSRP is more than a threshold at the time when the active RAN connection state has been suspended; or
- the UE mobility state has changed from stationary to non-stationary.

5. The anchor network node (400) according to any one of claims 1 to 4, wherein the means for the predicting (508) are configured to perform the predicting (508) by solving an optimization problem or using a priority scheduling algorithm.

6. A method for operating an anchor network node, comprising:

storing (504) an access context required to initiate data transfer when a user equipment, UE, is in a suspended Radio Access Network, RAN, connection state;
determining (506), based on pre-stored mobility information, that the UE is about to exit an anchor cell served by the anchor network node;
predicting (508), based on the pre-stored mobility information, a target time when the UE is about to initiate the data transfer, and at least one target cell in which the UE would appear to be located at the target time; and
sending (510) the access context to at least one target network node serving the at least one target cell before the target time
**characterized in that** the predicting (508) is further based on a pre-stored traffic profile.

7. The method according to claim 6, wherein said predicting (508) is performed by solving an optimization problem or using a priority scheduling algorithm.

8. A computer program product comprising a computer-readable medium that stores a computer code, wherein the computer code is configured, when executed by at least one processor, to cause the at least one processor to perform the method according to claim 6 or 7.

**Patentansprüche**

1. Ankernetzwerkknoten (400), der Folgendes umfasst:

Mittel (404) zum Speichern (504) von Folgendem:

- einem Zugangskontext (410), der erforderlich ist, um eine Datenübertragung zu initiieren, wenn sich eine Teilnehmereinrichtung, UE, in einem ausgesetzten Funkzugangsnetzwerk(RAN)-Verbindungszustand befindet; und
- Mobilitätsinformationen, die die UE betreffen;

Mittel zum Bestimmen (506) auf Basis der Mobilitätsinformationen, dass die UE im Begriff ist, eine vom Ankernetzwerkknoten (400) bediente Ankerzelle zu verlassen;
Mittel zum Vorhersagen (508) einer Zielzeit auf Basis der Mobilitätsinformationen, wenn die UE im Begriff ist, die Datenübertragung zu initiieren, und mindestens einer Zielzelle, in der sich die UE zur Zielzeit anscheinend befinden würde; und
Mittel zum Senden (510) des Zugangskontextes an mindestens einen Zielnetzwerkknoten, der die mindestens eine Zielzelle bedient, vor der Zielzeit,
**dadurch gekennzeichnet, dass** die Mittel (404) zum Speichern (504) ferner dazu ausgelegt sind, ein Verkehrsprofil zu speichern (504), das die UE betrifft, und dadurch, dass die Mittel zum Vorhersagen (402) dazu ausgelegt sind, das Vorhersagen (508) ferner auf Basis des Verkehrsprofils durchzuführen.

2. Ankernetzwerkknoten (400) nach Anspruch 1, der ferner Folgendes umfasst:

- Mittel zum mindestens einmaligen Erfassen der Mobilitätsinformationen und des Verkehrsprofils vor oder nach dem Initiieren jeder Datenübertragung, wenn sich die UE im ausgesetzten RAN-Verbindungszustand befindet; und

- Mittel zum Bereitstellen der Mobilitätsinformationen und des Verkehrsprofils zu deren Speicherung für Mittel (404) zum Speichern (504).

3. Ankernetzwerkknoten (400) nach Anspruch 1 oder 2, wobei die Mobilitätsinformationen Funkressourcenverwaltungs(RRM)-Messungen, einen UE-Mobilitätszustand, eine Liste der besten Nachbarzellen für die UE und Netzwerkknoten, die zu den besten Nachbarzellen gehören, oder eine Kombination davon umfassen, und wobei das Verkehrsprofil eine Verkehrsverteilung über die Zeit und/oder eine Schätzung der Verkehrsverteilung über die Zeit umfasst, die nach einer Aussetzung eines aktiven RAN-Verbindungszustands zu erwarten ist, die eine Ankunftszeit eines nächsten Datenverkehrs umfasst.

4. Ankernetzwerkknoten (400) nach Anspruch 3, wobei die Mittel zum Bestimmen (506) dazu ausgelegt sind, das Bestimmen (506) auf Basis von einem von Folgendem durchzuführen:

- wenn die RRM-Messungen eine Referenzsignalempfangsleistung, RSRP, der Ankerzelle umfassen, ist der UE-Mobilitätszustand auf nicht stationär eingestellt, und die RSRP der Ankerzelle zu der Zeit, zu der der aktive RAN-Verbindungszustand ausgesetzt wurde, ist kleiner als ein Schwellwert; oder

- wenn die RRM-Messungen eine RSRP umfassen, die unter RSRPs der besten Nachbarzellen die höchste ist, ist der UE-Mobilitätszustand auf nicht stationär eingestellt, und die höchste RSRP ist zu der Zeit, zu der der aktive RAN-Verbindungszustand ausgesetzt wurde, größer als ein Schwellwert; oder

- der UE-Mobilitätszustand hat sich von stationär in nicht stationär geändert.

5. Ankernetzwerkknoten (400) nach einem der Ansprüche 1 bis 4, wobei die Mittel zum Vorhersagen (508) dazu ausgelegt sind, das Vorhersagen (508) durch Lösen eines Optimierungsproblems oder Verwenden eines Prioritätsplanungsalgorithmus durchzuführen.

6. Verfahren zum Betreiben eines Ankernetzwerkknotens, das Folgendes umfasst:

Speichern (504) eines Zugangskontextes, der erforderlich ist, um eine Datenübertragung zu initiieren, wenn sich eine Teilnehmereinrichtung, UE, in einem ausgesetzten Funkzugangsnetzwerk(RAN)-Verbindungszustand befindet;

Bestimmen (506) auf Basis von vorab gespeicherten Mobilitätsinformationen, dass die UE im Begriff ist, eine vom Ankernetzwerkknoten bediente Ankerzelle zu verlassen;

Vorhersagen (508) einer Zielzeit auf Basis der vorab gespeicherten Mobilitätsinformationen, wenn die UE im Begriff ist, die Datenübertragung zu initiieren, und mindestens einer Zielzelle, in der sich die UE zur Zielzeit anscheinend befinden würde; und

Senden (510) des Zugangskontextes an mindestens einen Zielnetzwerkknoten, der die mindestens eine Zielzelle bedient, vor der Zielzeit

**dadurch gekennzeichnet, dass** das Vorhersagen (508) ferner auf einem vorab gespeicherten Verkehrsprofil basiert.

7. Verfahren nach Anspruch 6, wobei das Vorhersagen (508) durch Lösen eines Optimierungsproblems oder Verwenden eines Prioritätsplanungsalgorithmus durchgeführt wird.

8. Computerprogrammprodukt, das ein computerlesbares Medium umfasst, auf dem ein Computercode gespeichert ist, wobei der Computercode dazu ausgelegt ist, wenn er von mindestens einem Prozessor ausgeführt wird, den mindestens einen Prozessor zu veranlassen, das Verfahren nach Anspruch 6 oder 7 durchzuführen.

**Revendications**

1. Noeud de réseau d'ancrage (400) comprenant :

des moyens (404) pour stocker (504) :

- un contexte d'accès (410) requis pour initier un transfert de données lorsqu'un équipement utilisateur, UE, est dans un état de connexion de réseau d'accès radio, RAN, suspendu ; et
- des informations de mobilité relatives à l'UE ;

des moyens pour déterminer (506), sur la base des informations de mobilité, que l'UE est sur le point de quitter une cellule d'ancrage desservie par le noeud de réseau d'ancrage (400) ;
des moyens pour prédire (508), sur la base des informations de mobilité, une heure cible à laquelle l'UE est sur le point d'initier le transfert de données, et au moins une cellule cible dans laquelle l'UE semblerait se trouver à l'heure cible ; et
des moyens pour envoyer (510) le contexte d'accès à au moins un noeud de réseau cible desservant l'au moins une cellule cible avant l'heure cible,
**caractérisé en ce que** les moyens (404) de stockage (504) sont en outre configurés pour stocker (504) un profil de trafic relatif à l'UE, et **en ce que** les moyens de prédiction (402) sont en outre configurés pour réaliser la prédiction (508) sur la base du profil de trafic.

2.  Noeud de réseau d'ancrage (400) selon la revendication 1, comprenant en outre :

- des moyens pour acquérir les informations de mobilité et le profil de trafic au moins une fois avant ou après l'initiation de chaque transfert de données lorsque l'UE est dans l'état de connexion RAN suspendu ; et
- des moyens pour fournir les informations de mobilité et le profil de trafic aux moyens (404) de stockage (504) pour leur stockage.

3.  Noeud de réseau d'ancrage (400) selon la revendication 1 ou 2, dans lequel les informations de mobilité comprennent des mesures de gestion des ressources radio, PRM, un état de mobilité d'UE, une liste des meilleures cellules voisines pour l'UE et des noeuds de réseau appartenant aux meilleures cellules voisines, ou toute combinaison de ceux-ci, et dans lequel le profil de trafic comprend une distribution de trafic dans le temps, et/ou une estimation de la distribution de trafic dans le temps à attendre après une suspension d'un état de connexion RAN actif comprenant un moment d'arrivée d'un prochain trafic de données.

4.  Noeud de réseau d'ancrage (400) selon la revendication 3, dans lequel les moyens de détermination (506) sont configurés pour réaliser la détermination (506) sur la base de l'un des cas suivants :

- lorsque les mesures RRM comprennent une puissance de réception de signal de référence, RSRP, de la cellule d'ancrage, que l'état de mobilité d'UE est défini comme non stationnaire, et que la RSRP de la cellule d'ancrage est inférieure à un seuil au moment où l'état de connexion RAN actif a été suspendu ; ou
- lorsque les mesures RRM comprennent une RSRP qui est la plus élevée parmi les RSRP des meilleures cellules voisines, que l'état de mobilité d'UE est défini comme non stationnaire, et que la RSRP la plus élevée est supérieure à un seuil au moment où l'état de connexion RAN actif a été suspendu ; ou
- l'état de mobilité d'UE est passé de stationnaire à non stationnaire.

5.  Noeud de réseau d'ancrage (400) selon l'une des revendications 1 à 4, dans lequel les moyens de prédiction (508) sont configurés pour réaliser la prédiction (508) en résolvant un problème d'optimisation ou en utilisant un algorithme d'ordonnancement des priorités.

6.  Procédé d'exploitation d'un noeud de réseau d'ancrage, comprenant :

le stockage (504) d'un contexte d'accès requis pour initier un transfert de données lorsqu'un équipement utilisateur, UE, est dans un état de connexion de réseau d'accès radio, RAN, suspendu ;
la détermination (506), sur la base d'informations de mobilité pré-stockées, du fait que l'UE est sur le point de quitter une cellule d'ancrage desservie par le noeud de réseau d'ancrage ;
la prédiction (508), sur la base des informations de mobilité pré-stockées, d'une heure cible à laquelle l'UE est sur le point d'initier le transfert de données, et d'au moins une cellule cible dans laquelle l'UE semblerait se trouver à l'heure cible ; et
l'envoi (510) du contexte d'accès à au moins un noeud de réseau cible desservant l'au moins une cellule cible avant l'heure cible
**caractérisé en ce que** la prédiction (508) est en outre basée sur un profil de trafic pré-stocké.

7.  Procédé selon la revendication 6, dans lequel ladite prédiction (508) est réalisée en résolvant un problème d'optimisation ou en utilisant un algorithme d'ordonnancement des priorités.

8. Produit de programme informatique comprenant un support lisible par ordinateur qui stocke un code informatique, dans lequel le code informatique est configuré, lorsqu'il est exécuté par au moins un processeur, pour amener l'au moins un processeur à réaliser le procédé selon la revendication 6 ou 7.

FIG. 1

EP 3 876 602 B1

FIG. 2

300

UE AS context     UE AS context     UE AS context

302-1     302-2     302-3     302-4

| 304-1 | 304-2 | 304-3 | 304-4 |

306

RRC_INACTIVE     RRC_INACTIVE

RRC_CONNECTED        RRC_CONNECTED

RRC_INACTIVE

$t_0$     $t_1$     $t_2$     $t_3$     Time

**FIG. 3**

FIG. 4

502 — Causing a UE to transit from an active RAN connection state to a suspended RAN connection state

504 — Storing an access context required to initiate data transfer when the UE is in the suspended RAN connection state

506 — Determining, based on pre-stored mobility information, that the UE is about to exit an anchor cell

508 — Predicting, based on the pre-stored mobility information and a pre-stored time profile, a target time and at least one target cell

510 — Sending the access context to at least one target network node serving the at least one target cell before the target time

500

**FIG. 5**

FIG. 6

EP 3 876 602 B1

**FIG. 7**

**FIG. 8**

**FIG. 9**

900

906 — Centralized node

902-1 / 904-1, 902-2 / 904-2, 902-3 / 904-3

908 — Active RAN Connection / Suspended RAN Connection

Suspended RAN Connection / Active RAN Connection / Suspended RAN Connection

910 — Active RAN Connection / Suspended RAN Connection

FIG. 10

**FIG. 11**

1202 — Causing a UE to transit from an active RAN connection state to a suspended RAN connection state

1200

1204 — Storing an access context required to initiate data transfer when the UE is in the active or suspended RAN connection state

1206 — Receiving and storing downlink data for the UE

1208 — Determining, based on pre-stored mobility information, that the UE is about to exit an anchor cell

1210 — Predicting, based on the pre-stored mobility information and a pre-stored traffic profile, at least one target cell

1212 — Sending a request for paging initiation, the access context and the downlink data to at least one target network node

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007230399 A1
- EP 3445086 A1
- WO 2019232746 A1
- WO 2020040673 A1
- US 2014348133 A1
- EP 2123088 A1
- US 2008240439 A1
- US 2018270792 A1
- EP 3567980 A1
- US 9480046 B1